# EUROPEAN PATENT APPLICATION

(11) **EP 2 736 279 A1**
(43) Date of publication of application: **28.05.2014**
(21) Application number: 12007885.2
(22) Date of filing: 22.11.2012
(51) Int. Cl.: H04W 4/06

(54) **Methods and devices for broadcast messaging in a mobile communications system**

(71) Applicant: Giesecke & Devrient GmbH, 81677 München (DE)
(72) Inventor: Vui Huang, Tea, 12061 Stockholm (SE)

(57) **Abstract**

The present invention provides for a method for broadcasting message data in a mobile communications system comprising a backend server, an access point supporting a WLAN and a plurality of mobile stations within the communication range of the access point. The method comprises the steps of: providing the message data by the backend server to the access point; and modifying at least one beacon frame of a plurality of beacon frames being intermittently emitted by the access point for broadcasting the presence of the WLAN and received by the plurality of mobile stations by encoding the message data in the at least one beacon frame. Moreover, a corresponding access point, a corresponding mobile station and a corresponding mobile communication system are provided.

## Description

### Field of the Invention

The invention relates to mobile communications in general and in particular to methods and devices for broadcasting message data to a plurality of mobile stations in a mobile communications system.

### Background of the Invention

In addition to the very popular Short Message Service-Point to Point (SMS-PP) the GSM standard for mobile communications provides for a Short Message Service-Cell Broadcast (SMS-CB) that is designed for simultaneous delivery of messages to multiple mobile terminals in a specified area over the public land mobile network (PLMN) of a mobile network operator (MNO). Whereas SMS-PP is a one-to-one service, SMS-CB is a one-to-many geographically focused messaging service. Thus, as a SMS-CB message is directed to one or more radio cells, rather than to a specific terminal, a SMS-CB message can reach a large number of mobile terminals at once. Although SMS-CB is less affected by heavy network traffic and, therefore, still can be used during natural disasters, terrorist attacks or other extreme events, where load spikes tend to crash mobile networks, it has been implemented only by a few MNOs. Moreover, some mobile terminals do not have the hardware capabilities to support SMS-CB.

Consequently, it is an object of the invention to provide for alternative broadcast messaging methods and devices within a mobile communications system that can be implemented using substantially conventional equipment.

### Summary of the Invention

This object is achieved according to the present invention by the subject-matter of the independent claims. Preferred embodiments of the invention are defined in the dependent claims.

Generally, the present invention is based on the idea to communicate with a plurality of mobile stations within the communication range or service area of at least one WLAN access point by encoding broadcast messages in the beacon frames emitted intermittently by the WLAN access point.

More specifically, according to a first aspect the present invention provides for a method for broadcasting message data in a mobile communications system comprising a backend server, an access point supporting a WLAN and a plurality of mobile stations within the communication range of the access point. The method comprises the steps of: providing the message data by the backend server to the access point; and modifying at least one beacon frame of a plurality of beacon frames being intermittently emitted by the access point for broadcasting the presence of the WLAN and received by the plurality of mobile stations by encoding the message data in the at least one beacon frame.

According to a preferred embodiment, the message data is encoded in the at least one beacon frame by encoding the message data in a data element of the at least one beacon frame that identifies the WLAN. Preferably, the message data is encoded in the data element of the at least one beacon frame that identifies the WLAN by dividing the data element into a static portion and a dynamic portion, wherein the static portion of the data element remains constant and can be used to identify the WLAN and the dynamic portion contains the message data. It is further preferred that the dynamic portion of the data element contains in addition an application identification data element for identifying an application running on the mobile station for which the message data is intended, a checksum data element for providing the possibility to verify that the message data received by the mobile station has not been tampered with and/or a counter data element for identifying individual data packets making up the message data.

According to a preferred embodiment, the plurality of beacon frames intermittently emitted by the access point are compliant with the standard IEEE 802.11 and/ or one or more of its sub-standards, such as IEEE 802.11b, 802.11a, 802.11g, 802.11i, 802.11n, and 802.11ac, the Bluetooth standard (IEEE 802.15.1) or the WiMAX standard (IEEE 802.16), and the data element that identifies the WLAN is the SSID (service set identifier).

Preferably, in the step of providing the message data by the backend server to the access point the message data is provided by the backend server to a plurality of access points.

According to a second aspect the present invention provides for an access point supporting a WLAN, wherein the access point is configured to receive message data from a backend server and to modify at least one beacon frame of a plurality of beacon frames being intermittently emitted by the access point for broadcasting the presence of the WLAN and received by a plurality of mobile stations by encoding the message data in the at least one beacon frame.

According to a preferred embodiment, the access point is further configured to encode the message data in the at least one beacon frame by encoding the message data in a data element of the at least one beacon frame that identifies the WLAN.

Preferably, the access point is further configured to encode the message data in the data element of the at least one beacon frame that identifies the WLAN by dividing the data element into a static portion and a dynamic portion, wherein the static portion of the data element is constant and can be used to identify the WLAN and the dynamic portion contains at least part of the message data.

According to preferred embodiments, the access point is compliant with the standard IEEE 802.11 and/ or one or more of its sub-standards, such as IEEE 802.11b, 802.11a, 802.11g, 802.11i, 802.11n, and 802.11ac, the Bluetooth standard (IEEE 802.15.1) or the WiMAX standard (IEEE 802.16), and the data element that identifies the WLAN is the SSID (service set identifier).

According to a third aspect the present invention provides for a mobile station configured to extract message data from at least one beacon frame of a plurality of beacon frames being intermittently emitted by an access point for broadcasting the presence of a WLAN, wherein the message data is encoded in the at least one beacon frame.

Preferably, the mobile station is further configured to extract the message data from the at least one beacon frame by extracting the message data from a data element of the at least one beacon frame that identifies the WLAN.

According to a preferred embodiment, the mobile station comprises a WLAN module for communicating with the access point and the WLAN module is compliant with the standard IEEE 802.11 and/or one or more of its sub-standards, such as IEEE 802.11b, 802.11a, 802.11g, 802.11i, 802.11n, and 802.11ac, the Bluetooth standard (IEEE 802.15.1) or the WiMAX standard (IEEE 802.16).

According to preferred embodiments of the invention, the secure element of the at least one mobile station is a subscriber identity module (SIM), eUICC, UICC, USIM, R-UIM or ISIM. Preferably, the WLAN module is part of the secure element of the at least one mobile station for securely storing data that allows the at least one mobile station to attach to and communicate with the cellular communications network.

According to a fourth aspect the present invention provides for a mobile communication system for broadcasting message data, wherein the mobile communication system comprises at least one access point according to the second aspect of the invention; at least one mobile station according to the third aspect of the invention; and a backend server for providing the message data to the at least one access point.

Preferably, the mobile communication system further comprises a cellular communications network, wherein the at least one mobile station comprises a secure element for securely storing data that allows the at least one mobile station to attach to the cellular communications network and to communicate with the backend server via the cellular communications network. Preferably, the cellular communications network is a GSM, UMTS, LTE or CDMA network and the communication between the at least one mobile station and the backend server via the cellular communications network is done by SMS protocol (Short Message Service), USSD protocol (Unstructured Supplementary Service Data) or a similar text message protocol.

These and other features, characteristics, advantages, and objects of the invention will be clear from the following detailed description of preferred embodiments, given as a non-restrictive example, under reference to the attached drawings. The person skilled in the art will appreciate, in particular, that the above preferred embodiments can be combined in several ways, which will result in additional advantageous embodiments that are explicitly supported and covered by the present invention. In particular, the person skilled in the art will appreciate that the above described preferred embodiments can be implemented in the context of the above-mentioned first, second, third and fourth aspect of the invention.

### Brief description of the drawings

- Fig.1: shows a schematic overview of a mobile communications system for illustrating different aspects of the present invention;
- Fig. 2: shows schematically the modified SSIDs of three exemplary beacon frames for message broadcasting according to a preferred embodiment of the present invention;
- Fig. 3: shows a more detailed schematic view of the dynamic portion of the modified SSID of the first beacon frame of figure 2; and
- Fig. 4: shows a diagram illustrating the signal flow according to a preferred embodiment of the invention.

### Detailed description of preferred embodiments

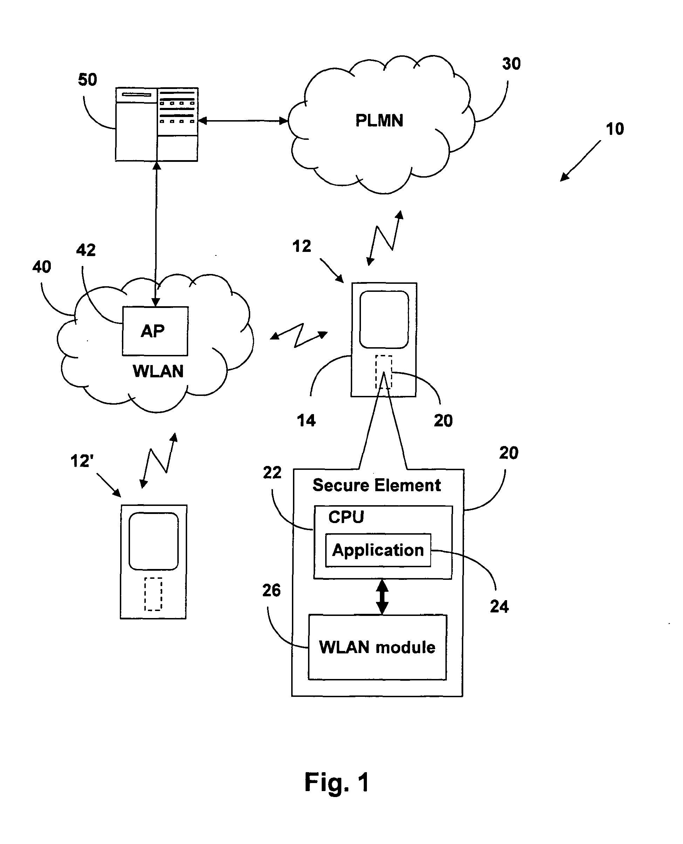

Figure 1 shows schematically the components of a mobile communications system 10 as well as some of the communication channels or links between the components of this system 10 for illustrating several aspects of the present invention.

An exemplary mobile station 12 is shown in figure 1 that consists of a mobile terminal 14 and a secure element 20 for securely storing and processing data that uniquely identifies the user of the mobile station 12. According to preferred embodiments of the invention the secure element 20 is configured as a subscriber identity module (SIM), as the SIM currently is the most popular type of secure element used in cellular communications systems for unique and secure subscriber identification as well as for the provision of different special functions and value-added services. The person skilled in the art will appreciate, however, that other types of secure elements that, depending on the underlying generation and type of cellular communications system standard, are designated as UICC, eUICC, USIM, R-UIM or ISIM, are also encompassed by the present invention. Moreover, the person skilled in the art will appreciate that the present invention can be advantageously put into practice, for instance, by means of a secure element 20 that can be removably inserted into the mobile terminal 14, such as a SIM, or, alternatively, a secure element 20 that is embedded, for instance soldered into the mobile terminal 14.

Preferably, the mobile station 12 is configured to communicate via the air interface (or radio link) with a mobile or cellular communications network in the form of a Public Land Mobile Network (PLMN) 30, preferably operated by a Mobile Network Operator (MNO) according to the GSM standard. To this end, subscriber credentials, such as an International Mobile Security Identity (IMSI) and/ or an authentication key Ki are securely stored on the secure element 20 for authenticating the secure element 20 relative to the PLMN 30 and for communicating therewith.

In the following, preferred embodiments of the invention will be described in the context of a mobile communications network according to the standards of the Global System for Mobile communication (GSM), as specified in a number of specifications provided by ETSI. However, the person skilled in the art will appreciate that the present invention may be advantageously applied in connection with other mobile communications systems as well. Such systems include third-generation mobile communications systems (3GPP), such as the Universal Mobile Telecommunications System (UMTS), and next generation or fourth-generation mobile networks (4G), such as Long Term Evolution (LTE), as well as other mobile communications systems, such as CDMA, GPRS (General Packet Radio Service) and CAMEL (Customised Applications for Mobile network Enhanced Logic).

As is well known to the person skilled in the art, the PLMN 30 configured according to the GSM standard generally comprises a base station subsystem consisting of one or more base transceiver stations that define respective cells of the PLMN 30 and are connected to a base station controller. Generally, the base station controller is one of several base station controllers that communicate with a mobile switching center (MSC). Often, a local database called Visitor Location Register (VLR) for keeping track of the mobile users currently located within the cells covered by a MSC (i.e. the MSC service area) is incorporated in the MSC. The MSC provides essentially the same functionality as a central office switch in a public-switched telephone network and is additionally responsible for call processing, mobility management, and radio resource management. The MSC is further in communication with a home location register (HLR), which is the primary database in the PLMN 30 that stores information about its mobile users for authentication. To this end, the HLR generally is in communication with an authentication center (AUC).

As can be taken from the enlarged view of the secure element 20 in figure 1, the secure element 20 comprises a central processing unit (CPU) 22. The CPU 22 can comprise or be in communication with a memory unit (not shown) for storing and retrieving subscriber credentials, such as an International Mobile Security Identity (IMSI) and/or an authentication key Ki for authenticating the secure element 20 relative to the PLMN 30. Preferably, at least one application 24 is running on the CPU 22 providing for features that will be described in more detail further below. The application 24 could be implemented, for instance, as a Java Applet.

Preferably, the secure element 20 furthermore comprises a WLAN module 26 in communication with the CPU 22 of the secure element 20. The WLAN module 26 is configured to establish a communication link between the secure element 20 and an access point (also called base station) of a WLAN, for instance the WLAN 40 established by the access point 42. A secure element 20 containing a WLAN module that could be advantageously employed according to the present invention is disclosed in WO 2006/137740. Although not preferred from a security standpoint, it is also conceivable that the WLAN module 26 is not part of the secure element 20, as shown in figure 1, but part of the mobile terminal 14.

Preferably, the WLAN 40 established by the access point 42 is a IEEE 802.11 WLAN, i.e. a WLAN and access point compliant with the standard IEEE 802.11 and/ or one or more of its sub-standards, such as IEEE 802.11b, 802.11a, 802.11g, 802.11i, 802.11n, and 802.11ac (such WLANs are also known as WiFi networks). Alternatively, the WLAN 40 could be a wireless LAN operated according to the Bluetooth standard (IEEE 802.15.1) or the WiMAX standard (IEEE 802.16).

According to the present invention the access point 42, preferably configured according to the standard IEEE 802.11 and/ or one or more of its sub-standards, is operated in public mode and broadcasts in preferably regular intervals, for instance every 100 microseconds, a so-called beacon frame containing information about the access point 42 and the WLAN 40, such as a WLAN specific identifier and information about the transmission rates supported by the access point 42 as well as the encryption protocol used thereby.

In particular, the beacon frames emitted by the WLAN access point 42 preferably include a WLAN specific identifier in the form of a SSID (Service Set Identifier). According to the standard IEEE 802.11 and/or one or more of its sub-standards the SSID is a string of up to 32 characters or bytes that uniquely identifies a WLAN and, therefore, can be considered to be the "name" of the WLAN.

According to the present invention the access point 42 is configured to send broadcast messages to mobile stations located within the access point's communication range or service area, such as the mobile station 12 and the mobile station 12' shown in figure 1, by encoding such broadcast messages into the beacon frames emitted by the access point 42. According to a preferred embodiment of the invention, these broadcast messages are encoded into the respective SSID portion of the beacon frames emitted by the access point 42.

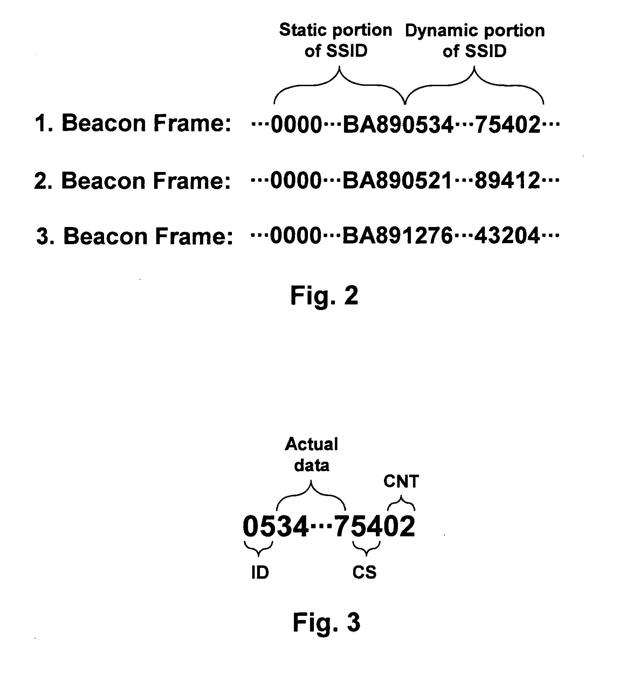

Figure 2 shows three exemplary SSIDs in hexadecimal notation that are consecutively emitted as part of three respective beacon frames by the access point 42 configured according to the present invention. The exemplary SSIDs shown in figure 2 each contain a constant static portion and a dynamic portion that generally changes from one beacon frame to the next.

On the one hand, as in the case of a conventional SSID, the constant static portion of the SSIDs shown in figure 2 can be used to define the "name" or "identity" of the access point 42 (which in the example of figure 2 is "0000···BA89" in hexadecimal notation). On the other hand, the dynamic portions of the SSIDs shown in figure 2 contain one or several broadcast messages. For instance, the SSID of the first beacon frame shown in figure 2 has the exemplary dynamic portion "0534···75402" in hexadecimal notation. As the person skilled in the art will appreciate, the static portion and the dynamic portion of the SSIDs according to the present invention could both have the same size or different sizes. For instance, both the static portion and the dynamic portion of a 802.11 compliant SSID could have a size of 16 bytes, as a 802.11 compliant SSID can have up to 32 bytes. Other sizes of the dynamic and static portions are possible.

Figure 3 shows the dynamic portion of the SSID of the first beacon frame shown in figure 2 in more detail. According to preferred embodiments of the present invention, the dynamic portion of the SSID preferably contains further to the actual data of the broadcast message additional data or metadata that provides information about the actual data. For instance, as shown in figure 3, the dynamic portion of the SSID preferably can contain an application identification data element ID, a checksum data element CS and/ or a counter data element CNT. The application identification data element ID can be used to identify the application running on the mobile station 12 or more specifically its secure element 20 for which the actual data or the payload of the broadcast message is intended. The checksum data element CS provides a possibility to verify that the broadcast message emitted by the access point 42 and received by the mobile stations 12, 12' has not been tampered with. The counter data element CNT can be advantageously employed in case of broadcast messages that are larger than a single dynamic portion of a SSID and, consequently, have to be divided into several data packets and distributed over several SSIDs. For instance, one portion of the counter data element CNT could be used as an actual counter to identify such a data packet, whereas the other portion of the counter data element CNT is used as an indicator of the total number of data packets making up the whole broadcast message, such as data packet 1 out of 2. Preferably, the data elements ID, CS and/ or CNT each have a size of 1 byte. The person skilled in the art will appreciate, however, that these data elements could also have sizes larger or smaller than one byte.

According to a preferred embodiment of the present invention, the access point 42 is configured to receive the actual data to be encoded in the beacon frames emitted by the access point 42, i.e. the content or payload of the broadcast message, from a backend server 50 that is in communication therewith. Such a configuration is schematically shown in figure 1. Preferably, the backend server 50 can communicate, for instance via the Internet, an Intranet or another kind of communication network, with a plurality of access points that are configured as the access point 42 shown in figure 1.

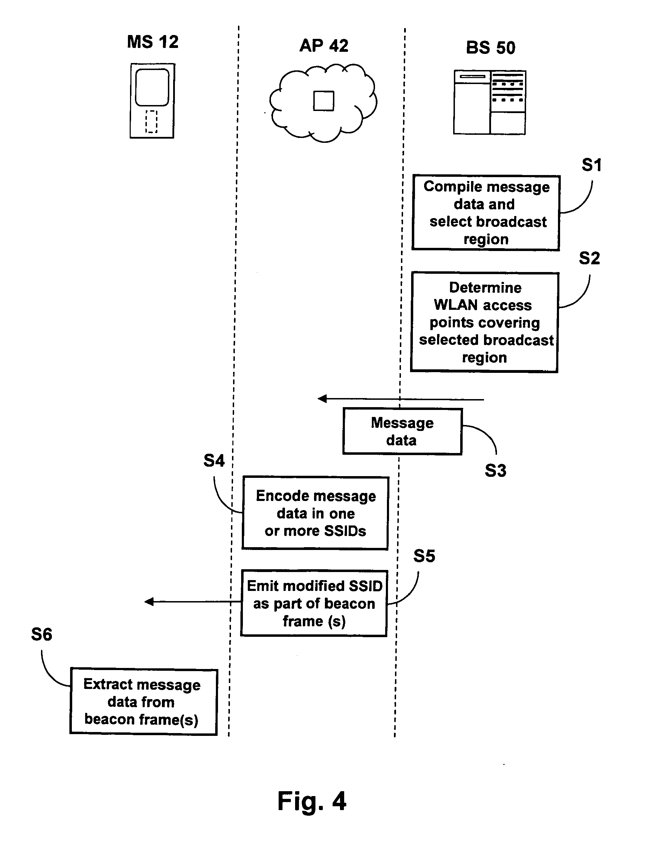

Under further reference to figure 4, a preferred configuration of the backend server 50 will now be described that allows sending out broadcast messages over a region covered by one or more access points, such as the access point 42. In step S1 of figure 4 the backend server 50 that could be operated by the same service provider as the PLMN 30 compiles the message data that is to be sent out as one or more broadcast messages and selects a geographic region where these broadcast messages are to be sent out. Obviously, in this step only those geographic regions can be selected that are actually covered by WLANs established by access points that are in communication with the backend server 50, such as the access point 42, and/ or operated by the service provider operating the backend server 50. These access points are determined in step S2 of figure 4. Once the appropriate access points have been determined on the basis of the selected geographical region, the message data is transmitted to these access points in step S3 of figure 4.

In step S4 of figure 4 the access point 42 being one of the access points selected by the backend server 50 encodes in the above described manner the message data received from the backend server 50, i.e. the SSID of a beacon frame is modified such that the dynamic portion thereof contains the message data received from the backend server 50. As mentioned above, in case the size of the message data provided by the backend server 50 is larger than the dynamic portion of the SSID of a single beacon frame, the access point 42 can divide the message data into several data packets to be encoded in the SSIDs of several beacon frames. Once, the access point 42 has encoded the message data in one or more SSIDs in step S4 of figure 4, the access point 42 broadcasts the corresponding one or more beacon frames in step S5 of figure 4 to any mobile station within the communication range of the access point 42. The person skilled in the art will appreciate that other than by the access point 42 the message data could be encoded in the SSID, for instance, by the backend server 50.

As the beacon frames emitted by the access point 42 are received by the mobile station 12 (as well as the mobile station 12') shown in figure 1, the mobile station 12 and/ or its secure element 20 can extract the message data originally provided by the backend server 50 from these beacon frames (see step S6 of figure 4). In the preferred embodiment, where the dynamic portion of a SSID contains a checksum over the message data, the mobile station 12 and/ or its secure element 20 can perform the additional step of verifying this checksum. The checksum could be, for instance, a CRC check sum, a Luhn checksum or the like.

Once, the message data has been extracted (and in the preferred embodiment its checksum has been verified), the message data can be passed on to an application the message data is intended for. As described above, the application is intended for could be identified by the application identification data element ID as part of the dynamic portion of the SSID. The application identified by the application identification data element ID could be running on the mobile station 12 or its secure element 20.

As already described above, according to a preferred embodiment of the invention the mobile station 12 (as well as the mobile station 12') is configured to communicate over the PLMN 30 with the backend server 50. In other words, further to the communication channel via the access point 42 the backend server 50 and the mobile station 12 (as well as the mobile station 12') can communicate via the PLMN 30. According to the present invention it is possible that the backend server 50 is operated by the service provider that operates the PLMN 30 as well. Alternatively, the backend server 50 and the PLMN 30 can be operated by different service providers.

In a preferred embodiment of the present invention, the mobile station 12 and/ or its secure element 20 are configured to provide response data to the message data received from the backend server 50. This response data can be communicated to the backend server 50 via the access point 42 and/or via the PLMN 30. The second communication channel between the mobile station 12 and the backend server 50 via the PLMN 30 can be advantageous especially for those cases, where the mobile station 12 does not have the necessary access data to attach to the WLAN defined by the access point 42, but still can receive the modified beacon frames emitted thereby. Preferably, the communication between the mobile station 12 and the backend server 50 via the PLMN 30 is done by SMS protocol (Short Message Service), USSD protocol (Unstructured Supplementary Service Data) or a similar text message protocol.

The present invention has been described in the context of some advantageous embodiments implemented in the context of a GSM network. However, this is not to be understood to restrict the invention to the details of these embodiments, which are presented for illustrative purposes only, as the general idea of the present invention could equally be implemented in the context of cellular communications systems other than GSM. In other words, in light of the above detailed description the person skilled in the art will appreciate that modifications and/ or additions can be made to the methods and devices as described heretofore, which are to be considered to remain within the scope of the present invention as defined by the appended claims.

## Claims

1. Method for broadcasting message data in a mobile communications system comprising a backend server (50), an access point (42) supporting a WLAN (40) and a plurality of mobile stations (12,12') within the communication range of the access point (42), wherein the method comprises the steps of:
providing the message data by the backend server (50) to the access point (42); and
modifying at least one beacon frame of a plurality of beacon frames being intermittently emitted by the access point (42) for broadcasting the presence of the WLAN (40) and received by the plurality of mobile stations (12,12') by encoding the message data in the at least one beacon frame.

2. The method of claim 1, wherein the message data is encoded in the at least one beacon frame by encoding the message data in a data element of the at least one beacon frame that identifies the WLAN (40).

3. The method of claim 2, wherein the message data is encoded in the data element of the at least one beacon frame that identifies the WLAN (40) by dividing the data element into a static portion and a dynamic portion, wherein the static portion of the data element is used to identify the WLAN (40) and the dynamic portion contains the message data.

4. The method of claim 3, wherein the dynamic portion of the data element further contains an application identification data element (ID) for identifying an application running on the mobile station (12,12') for which the message data is intended, a checksum data element (CS) for providing the possibility to verify that the message data received by the mobile station (12,12') has not been tampered with and/ or a counter data element (CNT) for identifying individual data packets making up the message data.

5. The method of anyone of claims 2 to 4, wherein the plurality of beacon frames intermittently emitted by the access point (42) are compliant with the standard IEEE 802.11 and/ or one or more of its sub-standards, such as IEEE 802.11b, 802.11a, 802.11g, 802.11i, 802.11n, and 802.11ac, the Bluetooth standard (IEEE 802.15.1) or the WiMAX standard (IEEE 802.16), and wherein the data element that identifies the WLAN (40) is the SSID (service set identifier).

6. The method of claim 1, wherein in the step of providing the message data by the backend server (50) to the access point (42) the message data is provided by the backend server (50) to a plurality of access points.

7. An access point (42) supporting a WLAN (40), wherein the access point (42) is configured to receive message data from a backend server (50) and to modify at least one beacon frame of a plurality of beacon frames being intermittently emitted by the access point (42) for broadcasting the presence of the WLAN (40) and received by a plurality of mobile stations (12,12') by encoding the message data in the at least one beacon frame.

8. The access point (42) of claim 7, wherein the access point (42) is further configured to encode the message data in the at least one beacon frame by encoding the message data in a data element of the at least one beacon frame that identifies the WLAN (40).

9. The access point (42) of claim 8, wherein the access point (42) is further configured to encode the message data in the data element of the at least one beacon frame that identifies the WLAN (40) by dividing the data element into a static portion and a dynamic portion, wherein the static portion of the data element is used to identify the WLAN (40) and the dynamic portion contains the message data.

10. The access point (42) of anyone of claims 7 to 9, wherein the access point (42) is compliant with the standard IEEE 802.11 and/or one or more of its sub-standards, such as IEEE 802.11b, 802.11a, 802.11g, 802.11i, 802.11n, and 802.11ac, the Bluetooth standard (IEEE 802.15.1) or the WiMAX standard (IEEE 802.16), and wherein the data element that identifies the WLAN (40) is the SSID (service set identifier).

11. A mobile station (12,12') configured to extract message data from at least one beacon frame of a plurality of beacon frames being intermittently emitted by an access point (42) for broadcasting the presence of a WLAN (40), wherein the message data is encoded in the at least one beacon frame.

12. The mobile station (12,12') of claim 11, wherein the mobile station (12, 12') is further configured to extract the message data from the at least one beacon frame by extracting the message data from a data element of the at least one beacon frame that identifies the WLAN (40).

13. The mobile station (12,12') of claim 11 or claim 12, wherein the mobile station (12,12') comprises a WLAN module (26) for communicating with the access point (42) and wherein the WLAN module (26) is compliant with the standard IEEE 802.11 and/ or one or more of its sub-standards, such as IEEE 802.11b, 802.11a, 802.11g, 802.11i, 802.11n, and 802.11ac, the Bluetooth standard (IEEE 802.15.1) or the WiMAX standard (IEEE 802.16).

14. Mobile communication system for broadcasting message data, wherein the mobile communication system comprises:
at least one access point (42) according to anyone of claims 7 to 10;
at least one mobile station (12,12') according to anyone of claims 11 to 13; and
a backend server (50) for providing the message data to the at least one access point (42).

15. The mobile communication system of claim 14, further comprising a cellular communications network (30), wherein the at least one mobile station (12,12') comprises a secure element (20) for securely storing data that allows the at least one mobile station (12,12') to attach to the cellular communications network (30) and to communicate with the backend server (50), wherein preferably the cellular communications network (30) is a GSM, UMTS, LTE or CDMA network and the communication between the at least one mobile station (12,12') and the backend server (50) via the cellular communications network (30) is done by SMS protocol (Short Message Service), USSD protocol (Unstructured Supplementary Service Data) or a similar text message protocol.
